# EUROPEAN PATENT APPLICATION

(11) **EP 4 763 554 A1**
(43) Date of publication of application: **24.06.2026**
(21) Application number: 24222320.4
(22) Date of filing: 20.12.2024
(51) Int. Cl.: B60J 1/20, B60J 7/00

(54) **CURVED ROLLER BLIND WINDING TUBE**

(71) Applicant: Inalfa Roof Systems Group B.V., 5807 GW Oostrum (NL)
(72) Inventor: Vidal, Juan Guerrero, 5807 GW OOSTRUM (NL); Broeren, Mark, 5807 GW OOSTRUM (NL)
(74) Representative: De Vries & Metman

(57) **Abstract**

The present invention relates to a curved winding tube assembly for a roller blind system comprising a static inner tube and a segmented outer wherein a first segment of the segmented outer tube provides bearing support to a floating end of the static inner tube and wherein a securing member engages a plurality of interconnected. The invention further relates to a roller blind assembly comprising such a curved winding tube, a roof assembly comprising such a roller blind assembly and a vehicle comprising said roof assembly.

## Description

The present invention relates to a curved winding tube assembly for a roller blind system comprising a static inner tube and a segmented outer wherein a first segment of the segmented outer tube provides bearing support to a floating end of the static inner tube and wherein a securing member engages a plurality of interconnected. The invention further relates to a roller blind assembly comprising such a curved winding tube, a roof assembly comprising such a roller blind assembly and a vehicle comprising said roof assembly.

### BACKGROUND

Vehicles, such as e.g. passenger cars, may be equipped with a roof or roof system having one or more roof panels. The roof panels may be movable between closed and open positions wherein a roof opening is covered or uncovered, or the roof panels may be fixed. In either case, one or more of the roof panels may be transparent to allow light to enter a passenger compartment of the vehicle. In order to be able to control the amount of light entering, the vehicle may be equipped with a roller blind assembly including a blind screen that is movable between closed and open positions, and any position therebetween i.e. partially closed or partially open. The roller blind assembly may also be referred to as a rollo assembly, likewise a blind screen may be referred to as a roller screen or rollo screen. Movement of the blind screen is enabled by wounding on or off a winding tube or shaft. In a fully opened position, the blind screen is completely wound upon the winding tube. In the closed position, the blind screen is, almost, completely wound off from the winding tube.

In known roller blind assemblies, the blind screen may be operated by drive cables driven by a motor, which drive cables are connected via slide shoes to an operating beam of the blind screen. The operating beam may also be referred to as a pull beam, as it may pull the blind screen, or it may further be referred to as a front beam, this in relation to its position relative to the front of the vehicle. The motor will drive movement of the drive cables, thereby moving the drive shoes and the connected operating beam. Hence, pulling the operating beam away from the winding tube will roll off the blind screen from the winding tube. Whereas pulling the operating beam towards the winding tube, will allow the blind screen to wind up on the winding tube. Thereto, the winding tube is usually provided with a spring-like assembly to enable the winding when uncovering the roof opening by the blind screen.

Alternatively, roller blind assemblies may be provided wherein the movement of the blind screen is operated by a motor directly driving the winding tube of the blind screen instead of via drive cables. In order to keep the blind screen taut in every position that the operating beam may be in, between a fully unrolled and fully rolled up blind screen, a tensioning wire is provided between the winding tube and the operating beam.

Such direct driven roller blind assemblies offer improvements with respect to noise, vibration and harshness as well as operating behavior and costs. However, due to differing vehicle designs, some roof systems require an arched roller blind assembly or more particularly an arched or curved winding tube to follow the contours of certain vehicles.

Known solutions for arched or curved winding tubes typically comprise a curved inner tube fixated on both ends of the winding tube with a plurality of rotatable segments rolling around said inner tube. With a direct driven roller blind assembly, this requires a complex fixation structure on the end driven by the drive motor. To reduce complexity, the curved inner tube is preferably held in place by the last rotatable segment on an outer end thus creating an indirect fixation on one, essentially floating, end of the winding tube. This, however, introduces the risk of wobbling of the floating end inside the rotatable segment.

In addition, with such a setup the plurality of rotatable segments may have too much wiggle room, thereby risking that the rotatable segments become loose in relation to each other and causing each segment to rotate independently rather than collectively, leading to a plurality of issues when winding or unwinding the curved winding tube.

### SUMMARY OF INVENTION

It is therefore an object of the invention to provide a curved winding tube which properly holds a floating end of the inner tube in position and simultaneously reduces the risk of the rotatable segments to become loose.

The object of the invention is achieved by providing a curved winding tube assembly for a roller blind system, wherein the curved winding tube comprises a static inner tube having a curvature, a segmented outer tube comprising a plurality of interconnected segments, wherein a first segment of the segmented outer tube provides bearing support to a floating end of the static inner tube, and wherein a securing member engages the plurality of interconnected segments thereby maintaining their relative position with respect to each other.

The static inner tube has a curvature with a radius dependent on the vehicle contours the winding tube will be applied to. The outer tube comprises a plurality of segments, relatively short in comparison to the inner tube, wherein each segment is preferably straight or has only a minimal curvature and wherein each segment is interconnected to each other forming an outer tube capable of revolving around the inner tube.

The static inner tube has a first end and a second end wherein the first end is situated near a drive motor and the second end is situated on the opposite side and fixed to an immovable fixation element. In contrast, however, the first end is supported by a first segment on the first end of the outer tube. In particular, the inner side of the first segment provides a bearing support for the first end of the inner tube. As such, the first end of the inner tube is not directly fixated but is held into a stable position by means of the inner workings of the first segment such that the inner tube is axially confined in line with the first segment. The first end of the inner tube may as such be considered floating within the winding tube assembly.

The segmented outer tube may have a second segment on the second end of the outer tube, situated on the side opposite of where the first segment is. The inner tube may extend through said second segment towards the immovable fixation element. As such, the second segment does not necessarily have to provide bearing support.

Both the first and the second segment preferably comprise a winding drum portion further comprising a winding groove for a wire to be wound or unwound from the winding drum. As such, the first and the second segment comprise a winding drum portion and a shaft portion wherein the shaft portions are interconnected with further segments of the outer tube, situated between the first and the second segment.

The plurality of segments of the outer tube may be interconnected with each other by means of interlocking interfaces that, for instance, slide over each other such as teething or fingers which may slide into, and interlock with, each other upon engagement.

To prevent the interconnection between the segments from loosening during operation of the winding tube, the segments are being kept interlocked by means of a securing member. Said securing member may be, for instance a strip of tape adhering to all of the segments and extending from the first segment towards the second segment. The strip of tape may be double-sided tape to additionally attach a blind screen to the segmented outer tube. The securing member may alternatively be a spring-like element on either side of the outer tube exercising a force onto a side of the outer tube thereby pushing the segments towards each other.

By using a first segment as bearing support for the inner tube and using a securing member to keep the segments interlocked, the object of the invention is achieved.

In an embodiment, the first segment of the segmented outer tube comprises a winding drum section and an elongated shaft wherein the elongated shaft has a minimum length to provide bearing support to the floating end of the static inner tube and a maximum length accommodated for the curvature of the static inner tube.

The floating end of the static inner tube resides within the elongated shaft and abuts an inner surface of the elongated shaft thereby providing a bearing support in order to prevent the floating end from displacement during operation. The elongated shaft has to be of a certain length to provide sufficient amount of contact points or contact area to sufficiently prevent displacement. At the same time, when the elongated shaft is too long it will create too many contact points or contact area due to the curvature of the static inner tube thereby pinching or jamming the first segment and thereby blocking the rotation of the first segment. The larger the radius of the static inner tube, the more critical these lengths become. As such, the elongated shaft needs to have a length withing a range to accommodate the amount of curvature of the static inner tube.

In an embodiment, the first segment is configured to be driven by a motor. The first segment may have a slot to receive a motor axle, allowing the first segment to be driven by the motor via the motor axle.

In an embodiment, each segment of the segmented outer tube comprises at least one slidable interlocking interface for locking in rotational direction and ensure that all segments jointly rotate about the inner tube. The slidable interlocking interface may be a set of teeth or fingers on at least one side of each segment. The teeth or fingers may engage with an edge of an adjacent segment or complementary teeth or fingers of an adjacent segment, allowing each segment to be interlocked with each other while at the same time allowing a degree of movement of the interlocking interfaces thereby making them slidable.

As a result of the curvature, the segments are closer together on a bottom side of the curvature in comparison to the upper side of the curvature, which also means that the slidable interlocking interface has more engagement on a bottom side than on a top side. Upon rotation of the segmented outer tube, the slidable interface allows the engagement to dynamically adjust depending on position of the interface during rotation. Thus, the segments stay connected with each other, when rotating collectively, while the amount or degree of engagement of each of the individual elements of each interface varies during rotation.

In an embodiment, a second segment of the segmented outer tube comprises a winding drum section, wherein the second segment is situated on an outer end of the outer tube, and wherein the static inner tube extends through an inner portion of the second segment. With a short winding tube, the second segment may be adjacent to the first segment. Longer winding tubes, however, will have a plurality of third segments in between the first and second segment.

In an embodiment, the static inner tube is attached to a fixating structure adjacent to an outer side of the second segment. The static inner tube may protrude through the second structure, the fixating structure may protrude through the second segment, or both at least a part of the static inner tube and the fixating structure may protrude through the second segment.

In an embodiment, the security member comprises a spring element situated on at least one end of the segmented outer tube thereby compressing the segments towards each other.

In an embodiment, the security member comprises a tape adhered to the surfaces of each segment of the segmented outer tube. The tape may be used in conjunction with the spring element of the previous embodiment. The tape may also be used as an alternative to the previous embodiment. The strip of tape may be double-sided tape to additionally attach a blind screen to the segmented outer tube instead of, or in addition to, a separate means of fixing the blind screen.

In an embodiment, the second segment comprises an elongated shaft wherein the elongated shaft has a minimum length to provide adhesion support to the tape and a maximum length accommodated for the curvature of the static inner tube. When the static inner tube is fixated by means of a fixating structure, the second segment does not necessarily require a minimum length to support the static inner tube. However, when a tape is used to secure the segmented outer tube, the tape needs to have sufficient surface area to adhere to. At the same time, as with the first segment, the elongated shaft of the second element preferably is not too long as it will otherwise impede the rotation of the second segment.

In an aspect of the invention, a roller blind system for a roof assembly is provided comprising a curved winding tube assembly as described above.

In another aspect of the invention, a roof assembly for a vehicle is provided comprising the roller blind system as described above.

In yet another aspect of the invention, a vehicle is provided comprising the roof assembly as described above

Further objects, aspects, effects and details of particular embodiments of the invention are described in the following detailed description of a number of exemplary embodiments, with reference to the drawings.

### BRIEF DESCRIPTION OF DRAWINGS

By way of example only, the embodiments of the present disclosure will be described with reference to the accompanying drawings, wherein:
FIG. 1A illustrates a perspective view of a curved winding tube assembly according to the present invention
FIG. 1B illustrates another perspective view of the curved winding tube assembly according to the present invention
FIG. 2 illustrates a top view of the curved winding tube assembly according to the present invention
FIG. 3A illustrates a cross-sectional side view of the curved winding tube assembly according to the present invention
FIG. 3B illustrates an enlarged view of one end of the curved winding tube assembly as shown in FIG. 3A
FIG. 3C illustrates an enlarged view of another end of the curved winding tube assembly as shown in FIG. 3A

### DETAILED DESCRIPTION

In the following description X-, Y- and Z-direction will refer to a direction corresponding to length, width and height of a vehicle, or the longitudinal, transversal and vertical direction, respectively.

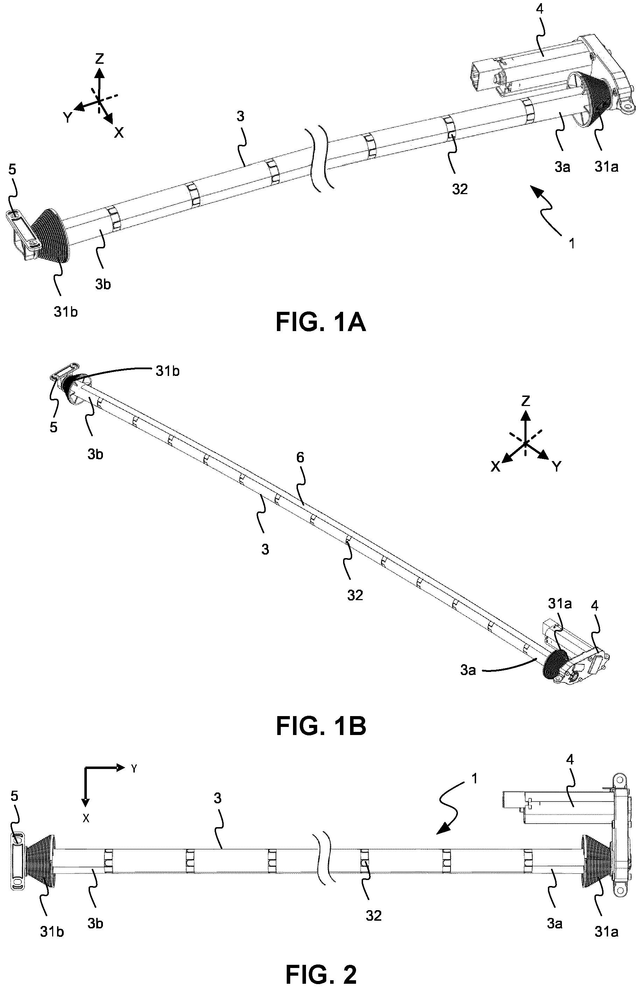

Fig. 1A and 1B illustrate a perspective view of a curved winding tube assembly 1. The assembly 1 includes a segmented outer tube 3 with a plurality of segments including a first segment 3a on a first end of the assembly 1 and a second segment 3b on a second end of the assembly 1.

The first segment 3a includes a winding drum 31a, the second segment 3b includes a winding drum 31b. The assembly 1 further includes a drive motor 4 on a first end and connected to the first segment 3a. The assembly 1 also includes a fixating structure 5 on a second end adjacent to the second segment 3b.

Each segment of the segmented outer tube 3 comprises slidable interlocking interfaces 32 which, resembling a set of teeth or fingers, slide into or over each other to allow interlocking of each segment while also allowing the interfaces to continuously slide in and out upon rotation of the segmented outer tube 3 around a curved inner tube 2, said inner tube 2 not directly visible in Fig. 1A or 1B.

In Fig. 1B, the curved winding tube assembly 1 is shown with a securing member 6 omitted in Fig. 1A for visibility purposes of the slidable interlocking interfaces 32. The securing member 6 is a strip of tape adhered to each segment.

In Fig. 2, the curved winding tube assembly 1 is illustrated in a top view in the XY-plane. As can be seen, the curved winding tube assembly 1 is not curved within this particular XY-plane.

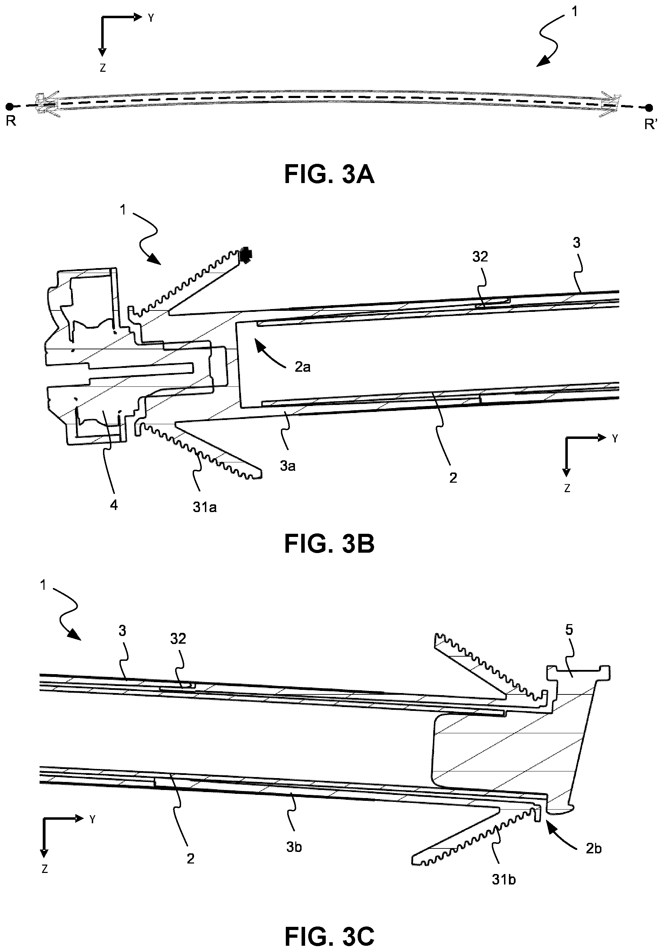

Figs. 3A, 3B and 3C illustrate the curved winding tube assembly 1 as a cross-sectional side view in the YZ-plane. As can be seen in Fig. 3A, the curved winding tube assembly 1 is curved within the YZ-plane and has a curvature RR' illustrated by the dashed curved line thus the curved winding tube assembly 1 has a radius extending in the Z-direction.

In Fig. 3B, an enlarged and more detailed view of the first end of the curved winding tube assembly 1 in accordance with Fig. 3A is illustrated. The curved inner tube 2 can be seen situated within the segmented outer tube 3. The first segment 3a is connected to the drive motor 4. As can be seen, the inner tube 2 has a floating end 2a that is held in place by the inner side of the first segment 3a without being fixed to any particular structure.

Fig. 3C illustrates an enlarged and more detailed view of the second end of the curved winding tube assembly 2 in accordance with Fig. 3A. The fixating structure 5 is adjacent to the second segment 3b, wherein the curved inner tube 2 has a portion 2b extending through the second segment 3b and fixated to the fixating structure 5.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in expectedly any appropriately detailed structure. In particular, features presented and described in separate de-pendent claims may be applied in combination and any advantageous combination of such claims are herewith disclosed.

Further, it is contemplated that structural elements may be generated by application of three-dimensional (3D) printing techniques. Therefore, any reference to a structural element is in-tended to encompass any computer executable instructions that in-struct a computer to generate such a structural element by three-dimensional printing techniques or similar computer-controlled manufacturing techniques. Furthermore, any such reference to a structural element is also intended to encompass a computer readable medium carrying such computer executable instructions.

Further, the terms and phrases used herein are not intended to be limiting, but rather to provide an understandable description of the invention. The terms "a" or "an", as used herein, are defined as one or more than one. The term plurality, as used here-in, is defined as two or more than two. The term another, as used herein, is defined as at least a second or more. The terms including and/or having, as used herein, are defined as comprising (i.e., open language). The term coupled, as used herein, is de-fined as connected, although not necessarily directly.

Although the present invention has been described above with reference to specific embodiments, it is not intended to be limited to the specific form set forth herein. Rather, the invention is limited only by the accompanying claims and other embodiments than the specific above are equally possible within the scope of these appended claims.

Furthermore, although exemplary embodiments have been described above in some exemplary combination of components and/or functions, it should be appreciated that, alternative embodiments may be provided by different combinations of members and/or functions without departing from the scope of the present disclosure. In addition, it is specifically contemplated that a particular feature described, either individually or as part of an embodiment, can be combined with other individually described features, or parts of other embodiments.

## Claims

1. A curved winding tube assembly (1) for a roller blind system, comprising
a static inner tube (2) having a curvature (RR'),
a segmented outer tube (3) comprising a plurality of interconnected segments
wherein a first segment (3a) of the segmented outer tube (3) provides bearing support to a floating end (2a) of the static inner tube (2), and wherein a securing member (6) engages the plurality of interconnected segments thereby maintaining their relative position with respect to each other.

2. A curved winding tube assembly (1) according to claim 1, wherein the first segment (3a) of the segmented outer tube (3) comprises a winding drum section (31a) and an elongated shaft wherein the elongated shaft has a minimum length to provide bearing support to the floating end (2a) of the static inner tube (2) and a maximum length accommodated for the curvature (RR') of the static inner tube (2).

3. A curved winding tube assembly (1) according to claim 1 or 2, wherein the first segment (3a) is configured to be driven by a motor (4).

4. A curved winding tube assembly (1) according to any of the preceding claims, wherein each segment of the segmented outer tube (3) comprises at least one slidable interlocking interface (32).

5. A curved winding tube assembly (1) according to any of the preceding claims, wherein a second segment (3b) of the segmented outer tube (3) comprises a winding drum section (31b), wherein the second segment (3b) is situated on an outer end of the outer tube (3), and wherein the static inner tube (2) extends through an inner portion of the second segment (3b).

6. A curved winding tube assembly (1) according to claim 5, wherein the static inner tube (2) is attached to a fixating structure (5) adjacent to an outer side of the second segment (3b).

7. A curved winding tube assembly (1) according to any of the preceding claims, wherein the security member (6) comprises a spring element situated on at least one end of the segmented outer tube thereby compressing the segments towards each other.

8. A curved winding tube assembly (1) according to any of the preceding claims, wherein the security member (6) comprises a tape adhered to the surfaces of each segment of the segmented outer tube.

9. A curved winding tube assembly (1) according to claim 8, wherein the second segment (3b) comprises an elongated shaft wherein the elongated shaft has a minimum length to provide adhesion support to the tape and a maximum length accommodated for the curvature of the static inner tube (2).

10. A roller blind system for a roof assembly comprising a curved winding tube assembly (1) according to any of the preceding claims.

11. A roof assembly for a vehicle comprising the roller blind system according to claim 10.

12. A vehicle comprising the roof assembly according to claim 11.
